Europäisches Patentamt

European Patent Office

Office européen des brevets

(19)

(11) Publication number: **0 114 522**

**A2**

(12) # EUROPEAN PATENT APPLICATION

(21) Application number: **83307915.5**

(22) Date of filing: **22.12.83**

(51) Int. Cl.³: **G 06 F 13/00**

(30) Priority: **27.12.82 US 453244**

(43) Date of publication of application:
**01.08.84 Bulletin 84/31**

(84) Designated Contracting States:
**DE FR GB**

(71) Applicant: **Synertek Inc.**
**3001 Stender Way**
**Santa Clara California 95014(US)**

(72) Inventor: **Koo, James T.**
**26982 Beaver Lane**
**Los Altos Hills California 94022(US)**

(74) Representative: **Harman, Michael Godfrey**
**Honeywell Control Systems Ltd. Patent Department**
**Charles Square**
**Bracknell Berkshire RG12 1EB(GB)**

(54) **ROM protection device.**

(57) A ROM module 14 is coupled to a processor 10, which uses program and/or data information stored in module 14. To protect the information from unauthorized copying, a key memory 11 in the processor 10 and a key memory 15 in the module 14 are arranged to store identical keys. Two encryption and/or decryption units 12 and 16, in processor 10 and module 16 as shown, encode and decode information passing between the processor 10 and the module 14.

The encryption and decryption may be applied to either the addresses sent to the module 14, the data coming from it, or preferably both.

The key register 15 may be repeatedly writeable, in which case the initial data transference between the processor and the module must be the key transmission, without encryption. Alternatively, the key memory 15 may be once writeable, so that the module is useable only with a processor which is preset with the key.

FIG.1

- 1 -

ROM PROTECTION DEVICE

The present invention relates to read only memories (ROMs) and more specifically to data encryption devices for use with ROMs.

In the fields of personal computers and home video games, software is commonly marketed in the form of object code encoded on ROMs. Commonly, these ROMs are packaged in cartridges which may be inserted into a receiver in the computer or video game console. The computer or game console is then able to access the software encoded on the ROM.

Such a system provides advantages for the user because of the ease of inserting such a cartridge, but at the same time causes disadvantages for the software provider. These disadvantages result from the ease with which the code on such a ROM may be unloaded and copied. Such copying clearly reduces the value of the software to the originator. A system which would prevent such copying would, therefore, be of commercial value to the originators of such software.

A second problem relating to the use of such ROM cartridges is that software is commonly licensed for use on a single processor. Although such licenses are legally binding, there is very little that the software originator can do to learn if such licenses have been violated, or to enforce such provisions. Therefore, a system which could limit the use of such ROMs to a single computer or video game console would provide the software originator with a system for enforcing such licenses.

Accordingly the present invention provides a module for storing information and including a ROM, characterized by a key memory and an encryption and/or decryption unit which encrypts and/or decrypts information passing to and from the ROM in dependence on the contents of the key memory.

An embodiment of the invention will now be described, by way of example, with reference to the drawings, in which:

Figure 1 is a block diagram of an embodiment of the invention,

Figure 2 is a schematic diagram of an encrypt unit and a decrypt unit, and

Figure 3 is a block diagram showing the use of one set of logic gates for both encryption and decryption.

INTRODUCTORY SUMMARY

The present system provides an encryption/decryption system for use with such ROMs. The encryption/decryption system is adapted to receive a key from the processor unit. In some embodiments this key is used to decrypt encrypted information transmitted from the processor unit to the ROM. Such information typically would include address locations in the ROM, from which information is being requested by the processor unit. In some embodiments the information transmitted back to the processor unit from the ROM is encrypted by the encruption/decryption unit prior to transmission to the processor unit. The key feature is that data transfer in at least one direction is encrypted. Such a system significantly increases the difficulty of copying such ROMs because address locations used to interrogate the ROM must be encrypted before they may be processed by the ROM and must be decrypted before they may be interpreted for use. Additionally a once programmable memory may be included with the encryption/decryption device to store the key. In such a case a unique key may be assigned to each processing unit manufactured. In that event the key associated with the first processing unit with which the ROM is used will be permanently stored in the encryption/decryption device memory, and the associated ROM will be limited to use with the first processing unit on which it is used.

DETAILED DESCRIPTION

As stated above the present system is useful with ROMs designed for use with both personal computers and home video games. Additionally such ROM based software may be used with other types of devices such as hand held calculators or larger computers. For the purposes of the discussion to follow the term processor unit will be understood to encompass any such device which may utilize ROM based software.

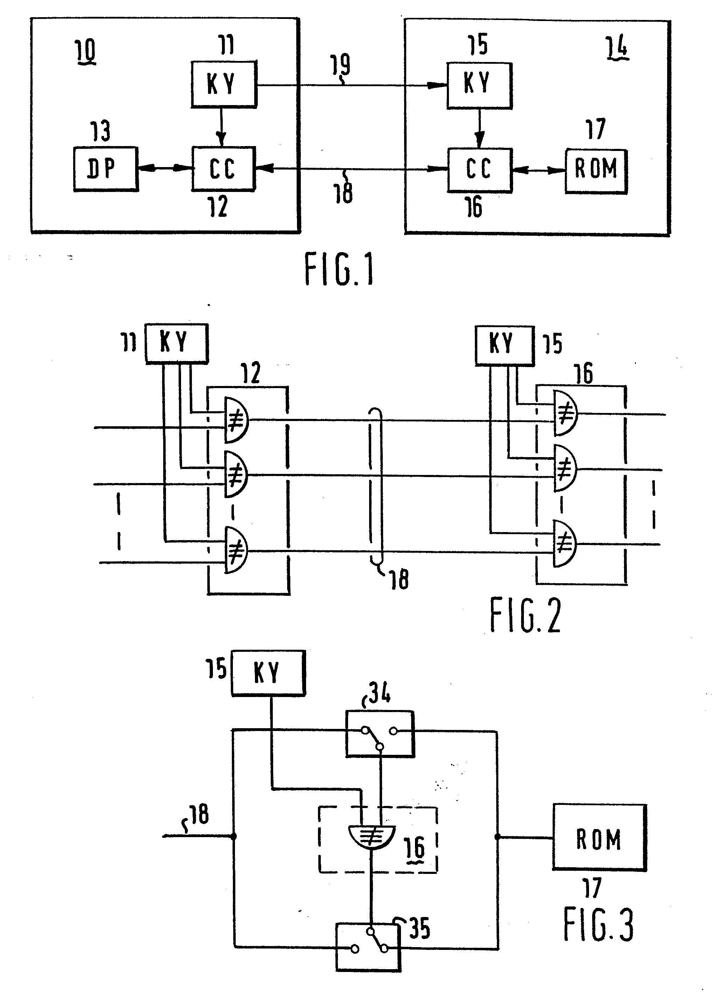

Figure 1 is a block diagram showing the utilization of an encryption/decryption system.  A processor unit 10 includes key unit 11, encryption/decryption device 12, and data processing means 13.  A ROM module 14 containing software executable by processor unit 10 includes a key sequence memory device 15, an encryption/decryption device 16, and ROM 17.  Typically everything in the module 14 would be provided in a cartridge insertible into a connector in processor unit 10.  Other systems are possible, however,  For example, the elements shown in module 14 may be provided on a circuit card which may be installed in processor unit 10.  Preferably everything within module 14 is provided on a single monolithic integrated circuit chip.

In operation ROM module 14 is electrically connected to processor unit 10.  When processor unit 10 is turned on, a key sequence is transmitted from processor unit 10 to ROM module 14.  This key sequence consists of a series of bits which may be permanently stored in a ROM in processor unit 10 or may be randomly generated by processor unit 10 each time it is turned on.  The key is transmitted to ROM module 14 via a special data bus 19.  In ROM module 14 the key sequence is stored in memory 15.

In an alternative embodiment the key sequence may be transmitted to ROM module 14 via main data bus 18.  In order to do this, bits of the key sequence in key unit 11 and key memory 15 are sequence initialized to a value which allows data to pass through encrypt/decrypt devices 12 and 16 unchanged.  Data processing means 13 then transmits a key sequence across data bus 18.  Since neither encrypt device 12 nor decrypt device 16 change the value of the data passing therethrough under such initialized conditions, the transmitted value may be stored in key unit 11 and the value received by ROM module 14 may be stored in key sequence memory 16.  In either of the methods described, using main data bus 18 or a special data bus 19, the important feature is that the same key sequence be stored in key unit 11 and key sequence memory 15.

Having stored the key sequence, the system is now ready to transmit data. When data processing means 13 requires information from the software stored in ROM 17, the request for that information, typically an address signal, is transmitted to encryption/decryption device 12, which encodes the data request in a manner determined by the key sequence supplied by key unit 11. The encrypted data request is transmitted to ROM module 14, where it is processed by encryption/decryption unit 16. The key stored in memory 15 (which is, as described above, the same key as was used in the encryption process by encryption/decryption unit 12) is used by encryption/decryption unit 16 to decrypt the data request and then transfer it to ROM 17. The contents of the interrogated data address in ROM 17 are transmitted back to encryption/decryption unit 16 where they are encrypted again using the key stored in memory 15. This encrypted data is then transmitted back to processor unit 10. In processor unit 10 the encrypted data is decrypted by encryption/decryption unit 12 using the key from key unit 11. The decrypted data is transmitted to data processing means 13 for further action.

As shown in Figure 1 the address signal transmitted from processor unit 10 to ROM module 14 and the data signal transmitted from ROM module 14 to processor unit 10 both travel along data bus 18, which is used in a time sharing mode. Alternatively separate data buses could be used for address signals and data signals.

In the preferred embodiment described above, addresses transferred from processor unit 10 to ROM cartridge 14 and data transferred from ROM cartridge 14 to processor unit 10 are both encrypted. The basic advantage of the system could be achieved by encrypting only the addresses or only the data, but maximum security results when both are encrypted.

Figure 2 illustrates an encryption/decryption device which can be used in the present system. The two encrypt/ decrypt devices 12 and 16 each consist of a set of Exclusive-OR gates, as shown. One set of inputs to the set of gates 12 is from data processing unit 13, and the other is from the key unit 11. The gates 12 feed one set of inputs to the gates 16, their other set of inputs being from the key unit 15, and these gates 16 feed the ROM 17.

This system works because (a) the two key units 11 and 15 contain identical keys, and (b) the result of Exclusive-ORing a data (or address) bit with the same key bit twice over is to leave the data (or address) bit unchanged. Thus the key in unit 11 will result in some of the data (or address) bits being complemented, and others unchanged, so that the data (or address) word as a whole is encrypted. The key in key unit 15 will result in a second complementing in gates 16 of those data (or address) bits which were complemented in unit 12, while leaving unchanged those data (or address) bits which were not changed in unit 12. Since two successive complementing operations on a bit restore the bit to its original value, the result is that the data (or address) word as a whole is decrypted, restored to its original value, by the unit 16.

The Figure 2 arrangement shows only the circuitry required for passing data or addresses from unit 10 to unit 14. Figure 3 shows how this circuitry can be adapted for two-way passage of information. For simplicity, only the unit 14 is shown, and only a single one of the set of gates 16 is shown. This gate 16 is fed from the key unit 15, and is coupled between two switching elements 34 and 35, as shown. To transmit information from bus 18 to the ROM 17, the switching elements 34 and 35 are set as shown; to transmit information the other way, the switching elements are switched to their opposite positions. The unit 12 will be constructed in the same way.

Of course, two separate sets of Exclusive-OR gates could be used in each of the units 12 and 16, and other encryption and decryption techniques could be used. It is convenient but not necessary to use a technique in which encryption and decryption involve identical operations.

The operation of the system will be determined in part by the nature of memory 15.

The memory 15 may be a volatile random access (READ/WRITE) memory (RAM), in which case a key sequence must be transferred to it each time a system to which ROM module 14 is connected is turned on. This key will be retained as long as power is supplied to memory 15. When the power supplied to memory 15 is disrupted, its contents will be lost and a key sequence must again be supplied before ROM module 14 may again be used. Any processor unit having an encryption/decryption unit 12 capable of supplying a key sequence to key sequence memory 15, and otherwise capable of executing software stored in ROM 17 may be used with ROM module 14.

The key sequence memory 15 may alternatively be a once programmable device such as a programmable read only memory (PROM). When key sequence memory 15 is a PROM device, a key sequence is permanently stored therein when ROM module 14 is first used. Thereafter only a processor unit having the same key sequence may be used in conjunction with ROM module 14. If each processor unit manufactured is given a different key sequence, ROM module 14 will function only with the first processor unit with which it is used, i.e., the processor unit having the key sequence which corresponds to key sequence stored in key sequence memory 15.

## CLAIMS

1. A module (14) for storing information and including a ROM (17), characterized by a key memory (15) and an encryption and/or decryption unit (16) which encrypts and/or decrypts information passing to and from the ROM in dependence on the contents of the key memory.

2. A module according to Claim 1, characterized in that the key memory is a repeatedly writeable memory.

3. A module according to Claim 1, characterized in that the key memory is a once programmable memory.

4. A module according to any previous Claim, characterized in that the encryption and/or decryption unit comprises a set of Exclusive-OR gates (Figure 2).

5. A memory according to Claim 4, characterized by switching means (34, 35) effective to couple the set of Exclusive-OR gates in the bus to the ROM when information passes to the ROM and in the bus from the ROM when information passes from the ROM.

6. A data processing system (10) for receiving a module according to any previous Claim, characterized by a key (11) and an encryption and/or decryption unit (12) which encrypts and/or decrypts information passing to and from the module in dependence on the contents of the key memory.

0114522

1/1

FIG.1

FIG.2

FIG.3